# EUROPÄISCHE PATENTSCHRIFT

(11) **EP 1 553 405 B1**
(45) Veröffentlichungstag und Bekanntmachung des Hinweises auf die Patenterteilung: **30.03.2011**
(21) Anmeldenummer: 05005396.6
(22) Anmeldetag: 29.07.1994
(51) Int. Cl.: G01N 21/90, B07C 5/12, B07C 5/34, G01B 11/16

(54) **Inspektionsmaschine**
Inspecting machine
Machine de contrôle

(30) Priorität: 30.07.1993 DE 9311405 U; 01.09.1993 DE 9313115 U
(43) Veröffentlichungstag der Anmeldung: 13.07.2005
(62) Teilanmeldung aus: 94924822.3
(73) Patentinhaber: Krones AG, 93073 Neutraubling (DE)
(72) Erfinder: Kronseder, Hermann, 93086 Wörth (DE); Häring, Franz, 93073 Neutraubling (DE); Griesbeck, Karl, 93053 Regensburg (DE); Ruppelt, Wolfgang, 93176 Beratzhausen (DE)
(74) Vertreter: Grünecker, Kinkeldey, Stockmair & Schwanhäusser Anwaltssozietät

(56) Entgegenhaltungen:
- EP-A- 0 037 694
- EP-A2- 0 258 810
- GB-A- 977 059
- JP-A- 2 198 309
- US-A- 3 932 042
- US-A- 4 025 201
- US-A- 4 280 624
- US-A- 4 553 217
- US-A- 4 586 080
- US-A- 4 751 386

## Beschreibung

Die Erfindung betrifft eine Inspektionsmaschine für durchleuchtbare Flaschen oder dgl. gemäß dem Oberbegriff des Anspruchs 1.

In Getränkeabfüllinien werden derartige Inspektionsmaschinen eingesetzt, um vor dem Befüllen beschädigte oder unsaubere Flaschen zu erkennen und auszuscheiden. Zur Überprüfung des Seitenwandbereichs der Flaschen sind Inspektionssysteme bekannt, die zur Bildaufnahme der Flaschenseitenwand eine kontinuierliche Drehung der Flaschen um ihre Hochachse erfordern. Während der Drehbewegung wird von der Bildaufnahmeeinrichtung, z.B. Zeilenkamera, im wesentlichen nur die Flaschenmitte entlang einer vertikalen Linie aufgenommen. Das durch dieses Abwicklungsverfahren erhaltene Bild einer Flaschenseitenwand zeichnet sich durch eine hohe Aufnahmequalität aus, da praktisch keine optischen Verzerrungen durch die Seitenwandkrümmung auftreten.

Andererseits erfordert die Drehung der Flaschen zur Bildaufnahme einen nicht unerheblichen mechanischen Aufwand (Karussell mit Drehtellern o.ä.).

Außerdem ist bereits eine Inspektionsvorrichtung bekanntgeworden, die ohne eine Flaschendrehung während der Bildaufnahme des Seitenwandbereichs auskommt (DE-AS 26 17 457). Dabei wird der Seitenwandbereich von nur einer Kamera aus zwei verschiedenen Richtungen aufgenommen. Einerseits besitzt eine derartige Inspektionseinrichtung einen vergleichsweise einfachen Aufbau, andererseits müssen aber durch die Oberflächenkrümmung der Flasche verursachte optische Verzerrungen in den Randbereichen der aufgenommenen Bilder in Kauf genommen werden, wodurch die Bildauswertung zur Erkennung von Schmutz oder Beschädigungen erschwert wird.

Demzufolge liegt der Erfindung, aus gehend von dem zuletzt genannten Stand der Technik, die Aufgabe zugrunde, eine Inspektionsvorrichtung zur Seitenwandkontrolle von Flaschen oder dgl. anzugeben, die nur wenig Aufwand erfordert und eine gute Bildqualität liefert.

Die Aufgabe wird durch die im kennzeichnenden Teil des Anspruchs 1 angegebenen Merkmale gelöst.

Besonders vorteilhaft ist eine Spiegelanordnung, die gleich lange Strahlengänge vom Seitenwandbereich einer zu prüfenden Flasche bis zur Bildaufnahmeeinrichtung (CCD-Kamera) liefert. Dadurch kann sichergestellt werden, daß die von den einzelnen Strahlengängen gelieferten Abbildungen gleich groß sind, wodurch Schwierigkeiten bei der Bildauswertung vermieden werden.

Erfindungsgemäß wird eine besonders kompakte Bauweise der Inspektionseinrichtung ermöglicht.

Ferner kann der Inspektionsstation eine weitere Bildaufnahmeeinrichtung (CCD-Kamera) zur Kontrolle der Kontur, Höhe oder Farbe der die Inspektionsstation passierenden Flaschen zugeordnet werden. Diese zweite Bildaufnahmeeinrichtung kann so positioniert werden, daß ihr Strahlengang ebenfalls den Kreuzungsbereich der Strahlengänge der Seitenwandkontrolle schneidet, wodurch vorteilhafterweise durch nur eine Ansteuerung die Bildaufnahme beider Bildaufnahmeeinrichtungen gleichzeitig auslösbar ist.

Vorteilhafte Weiterbildungen der Inspektionsmaschine sind Gegenstand der Unteransprüche.

Nachfolgend werden Ausführungsbeispiele anhand der Figuren erläutert. Es zeigt:
- Fig. 1: eine schematische Draufsicht auf eine Inspektionsmaschine mit einer Inspektionsstation zur Seitenwandkontrolle,
- Fig. 2: eine vergrößerte Darstellung der Inspektionsstation zur Seitenwandkontrolle nach Fig. 1,
- Fig. 3: eine erste Seitenansicht der Inspektionsstation nach Fig. 2 in Flaschenförderrichtung betrachtet,
- Fig. 4: eine zweite Seitenansicht der Inspektionsstation nach Fig. 2 in Förderrichtung der Flaschen betrachtet,
- Fig. 5: eine dritte Seitenansicht der Inspektionsstation nach Fig. 2 in Förderrichtung der Flaschen betrachtet,
- Fig. 6: eine schematische Draufsicht auf eine Inspektionsstation zur Seitenwandkontrolle mit einer von der Fig. 2 abweichenden Spiegelanordnung und
- Fig. 7: eine schematische Draufsicht auf eine Inspektionsmaschine mit zwei Inspektionsstationen zur Seitenwandkontrolle von Flaschen.

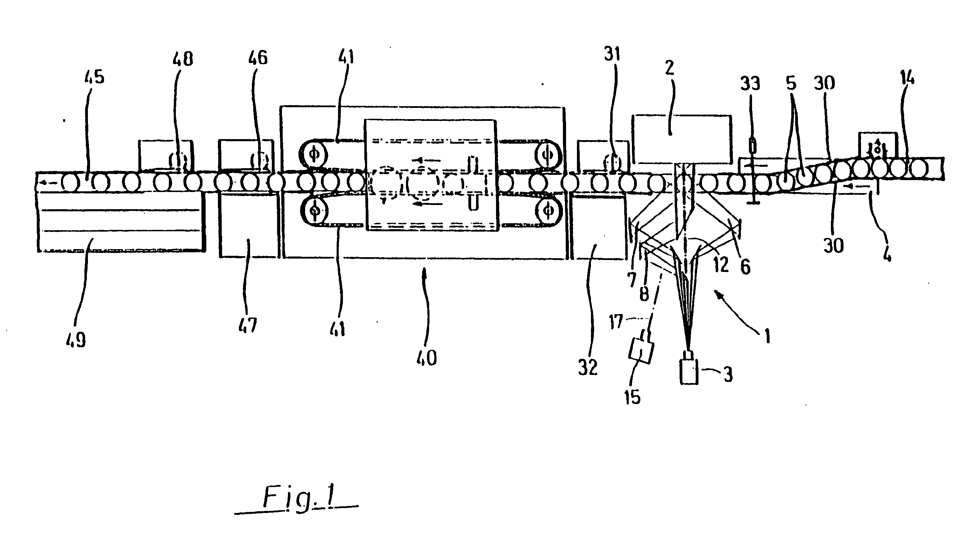

Wie aus der in der Fig. 1 schematisch dargestellten Draufsicht erkennbar ist, werden die zu prüfenden Flaschen 5 durch einen kontinuierlich antreibbaren Zuförderer 14 der Inspektionsmaschine zugeführt. Die durch den Zuförderer 14, z.B. ein Plattenförderband, in einer geschlossenen Reihe aufrechtstehend transportierten Flaschen 5 werden durch Führungsgeländer 30 auf ein parallel angeordnetes, mit erhöhter Geschwindigkeit synchron zum Zuförderer 14 angetriebenes Förderband 4 überführt, wobei durch den Geschwindigkeitssprung Lücken bzw. Zwischenabstände im Flaschenstrom erzeugt werden. Diese Zwischenabstände sind zur Durchführung der Seitenwandkontrolle notwendig.

Die Seitenwandkontrolle erfolgt durch eine am Förderband 4 angeordnete Inspektionsstation 1, die im wesentlichen aus einem diffuses Licht abstrahlenden Leuchtschirm 2, einer Kamera 3 und zwischen dem Förderband 4 und der Kamera 3 angeordneten Spiegeln zur Erzeugung der Strahlengänge 6, 7 und 8 besteht. Außerdem ist die Inspektionsstation 1 mit einer zweiten Kamera 15 zur Kontur-, Höhen- und/oder Farberkennung ausgestattet. In Förderrichtung gesehen hinter der Inspektionsstation 1 ist eine ansteuerbare Auswerfereinrichtung 31 an einer Seite des Transportbandes 4 plaziert, der gegenüberliegend ein Auffangbehälter 32 zugeordnet ist. Mit der Auswerfereinrichtung 31, z.B. ein quer zur Förderrichtung impulsartig vor- und zurücksteuerbarer Pusher oder Stößel, können durch die zweite Kamera 15 erkannte Fremdflaschen, die beispielsweise einen bestimmten Durchmesser oder eine vorgebbare Höhe überschreiten, zum Schutz nachfolgender Inspektionseinrichtungen vom Förderband 4 entfernt werden. Die Ansteuerung der beiden Kameras 3, 15 und der Auswerfereinrichtung 31 erfolgt unter Berücksichtigung der Fördergeschwindigkeit durch eine der Inspektionsstation 1 vorgeordnete Triggerlichtschranke 33.

Der Inspektionsstation 1 zur Seitenwandkontrolle ist außerdem eine zweite Inspektionsstation 40 nachgeordnet. In dieser Inspektionsstation können die Flaschen 5 durch zwei gegenüberliegend angeordnete, synchron zum Förderband 4 antreibbare Riemen 41 seitlich an der Mantelfläche eingeklemmt und bodenfrei über mehrere Inspektionseinrichtungen zur Boden-, Mündungskontrolle oder Restflüssigkeitserkennung transportiert werden. Nach Abschluß dieser Inspektionsvorgänge werden die Flaschen von den Riemen 41 auf ein nachfolgendes Förderband 45 abgestellt und freigegeben.

Hinter der zweiten Inspektionsstation 40 ist wiederum eine ansteuerbare Auswerfereinrichtung 46 mit einem gegenüberliegend am Transportband 45 angeordneten Auffangbehälter 47 plaziert, um durch die erste oder zweite Inspektionsstation 1, 40 als nicht weiterverwendbar erkannte Flaschen, z.B. mit Ausbrüchen an der Mündung, ausscheiden zu können. Dahinterliegend ist eine dritte Auswerfereinrichtung 48 zur Ausschleusung von evtl. nach einer erneuten Reinigung weiter verwendbaren Flaschen auf einen parallel zum Förderband 45 angeordneten Förderer 49 vorgesehen.

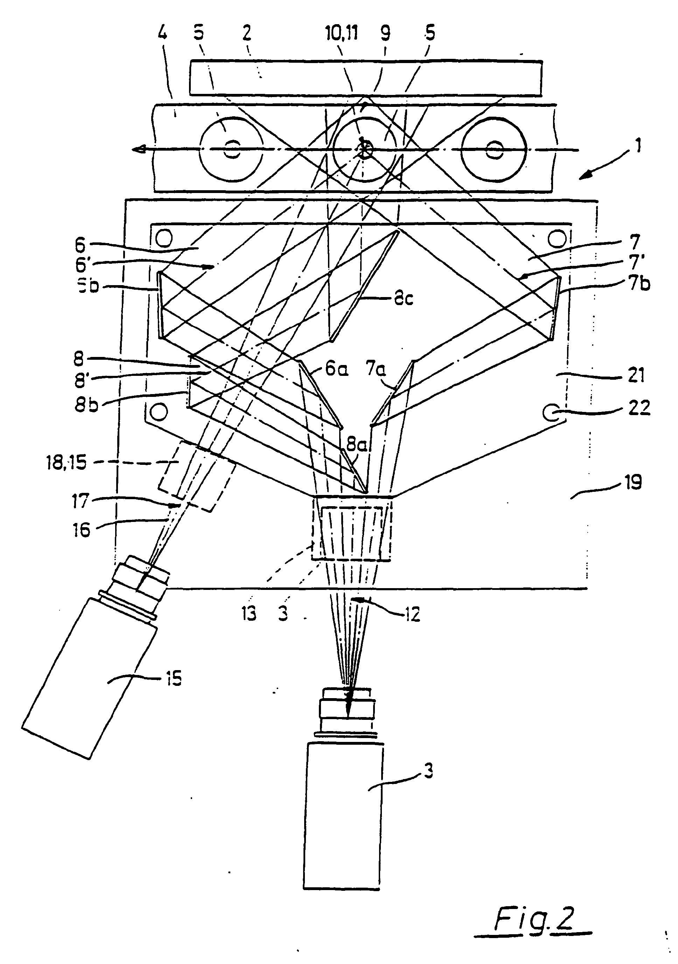

Aus der Fig. 2 ist die Anordnung der die drei Strahlengänge 6, 7, 8 erzeugenden Spiegel ersichtlich. Die beiden Strahlengänge 6 und 7 sind zur optischen Achse 12 der Kamera 3 symmetrisch ausgebildet bzw. angeordnet. Dementsprechend sind auch die den Strahlengang 7 bildenden Spiegel 7a und 7b symmetrisch zu den Spiegeln 6a und 6b des Strahlenganges 6 positioniert. Die beiden Spiegel 6b und 7b sind so zueinander ausgerichtet, daß sich die Strahlengänge 6 und 7 unter einem bestimmten Winkel, z.B. 60 Grad, bezogen auf die Mittelachsen 6' und 7' der Strahlengänge, in einem über dem Förderband 4 liegenden Kreuzungsbereich 9 treffen. Ein dritter Strahlengang 8 wird, ausgehend von der Kamera 3, durch drei Spiegel 8a, 8b, 8c so umgelenkt, daß die Mittelachse 8' dieses dritten Strahlenganges 8 im Kreuzungsbereich 9 den von den beiden Mittelachsen 6' und 7' eingeschlossenen Winkel halbiert. Der Spiegel 8c ist so positioniert, daß die in Fig. 2 dargestellte senkrechte Projektion der Mittelachse 8' an der gemeinsamen Schnittstelle 10 der drei Mittelachsen 6', 7' und 8' sowohl normal zur Symmetrielinie 11 der zu prüfenden Flasche 5 als auch zur Förderrichtung des Förderbands 4 ausgerichtet ist. Die für die Seitenwandkontrolle zuständige Kamera 3 ist mit einem Flächenarray ausgestattet, auf dem die drei Strahlengänge 6, 7 und 8 nebeneinander abgebildet werden. Der Kamera 3 ist eine nicht dargestellte Auswerteinrichtung zugeordnet, die das von der Kamera aufgenommene Bild programmgesteuert auswertet. Das Auswertprogramm kann so gestaltet sein, daß von jedem Strahlengang jeweils nur der mittlere Bildbereich ausgewertet wird, während die Randbereiche ausblendbar sind bzw. ignoriert werden, um Ungenauigkeiten in den Randbereichen der aufgenommenen Bilder infolge der optischen Verzerrungen an den stark gekrümmten Flaschenrändern zu vermeiden.

Außerdem ist der Inspektionsstation 1 eine zweite Kamera 15 zur Kontrolle der Kontur- und/oder Höhe und/oder Farbe der zu prüfenden Flaschen zugeordnet. Diese zweite Kamera 15 ist so angeordnet, daß ihr Strahlengang 16 ungehindert zwischen den Spiegeln der Seitenwandkontrolleinrichtung hindurch auf eine sich gerade im Kreuzungsbereich 9 befindende Flasche 5 treffen kann. Insbesondere ist die optische Achse 17 der Kamera 15 so ausgerichtet, daß sie ebenfalls durch die gemeinsame Schnittstelle 10 der drei Strahlengänge 6, 7 und 8 der Seitenwandkontrolle verläuft. Dadurch sind die beiden Kameras 3 und 15 mit einem gemeinsamen Steuersignal zur gleichzeitigen Bildaufnahme ansteuerbar. Besonders günstig ist eine Anordnung des Strahlengangs 16 der Kamera 15, bei der die senkrechte Projektion der optischen Achse 17 die senkrechte Projektion der Mittelachse 8' bzw. die optische Achse 12 der Kamera 3 mit einem Winkel von ca. 25 Grad kreuzt.

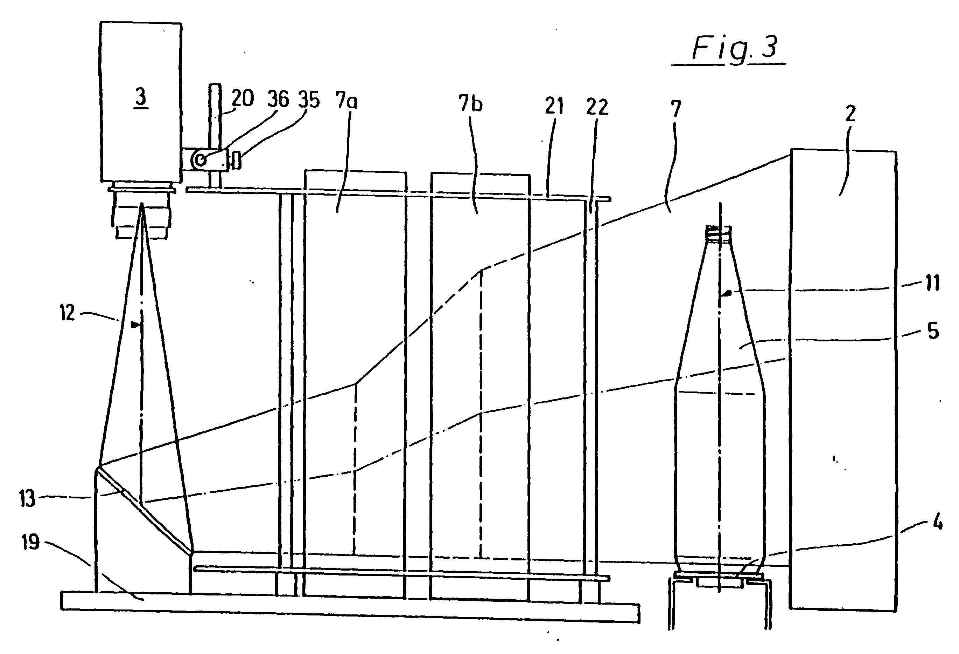

Abweichend von der Darstellung in Fig. 2 sind die beiden Kameras 3 und 15 mit ihren optischen Achsen 12 und 17 senkrecht zur Förderebene der Flaschen stehend angeordnet vorgesehen. Diese Alternative ist in der Fig. 2 mit gestrichelten Umrißlinien angedeutet und in den Fig. 3 bis 5 dargestellt.

Diese Anordnung gestattet eine sehr kompakte, platzsparende Bauweise der Inspektionsstation 1, da der quer zum Förderband 4 erforderliche Abstand im Vergleich zur Ausführung nach Fig. 2 deutlich verkürzt werden kann.

In der in Fig. 3 dargestellten Seitenansicht der Fig. 2 sind zwecks der besseren Übersicht nur die Kamera 3 und die beiden dem Strahlengang 7 zugeordneten Spiegel 7a und 7b dargestellt. Eingezeichnet ist der Strahlverlauf der in Fig. 2 mit 7' bezeichneten Mittelachse. Die Positionierung der ebenen Spiegel 7a und 7b (und auch der übrigen Spiegel) erfolgt durch zwei mit Abstand zueinander parallel, jeweils in einer horizontalen Ebene liegende Positionierplatten 21, die durch Distanzstangen 22 auf einer Grundplatte 19 befestigt sind. Die Positionierplatten 21 besitzen der Dicke und Breite der Spiegel entsprechende Schlitze (siehe Fig. 2). Die Spiegel sind durch diese Schlitze von oben her einführbar und stehen mit ihrer unteren Kante auf der Grundplatte 19. Dadurch ist im Falle von Beschädigungen ein einfacher und schneller Austausch der Spiegel möglich.

Auf der oberen Positionierplatte 21 ist eine Führung 20 befestigt, an der die senkrecht stehend angeordnete Kamera 3 mittels einem Klemmstück 35 höhenverstellbar gehalten wird. Das Klemmstück besitzt außerdem ein Drehgelenk 36 zur Einstellung des Auftreffwinkels der optischen Achse 12 der Kamera 3 auf den darunter auf der Grundplatte 19 angeordneten Spiegel 13.

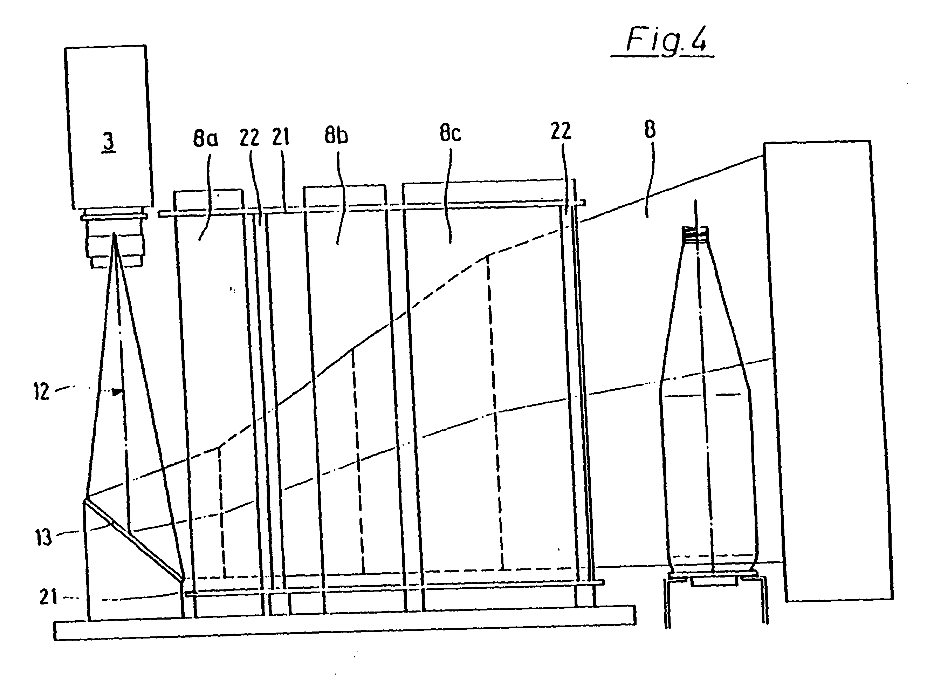

In Fig. 4 sind die dem mittleren Strahlengang 8 zugeordneten Spiegel 8a, 8b und 8c dargestellt, wobei ebenfalls zur besseren Übersicht alle übrigen Spiegel nicht eingezeichnet sind.

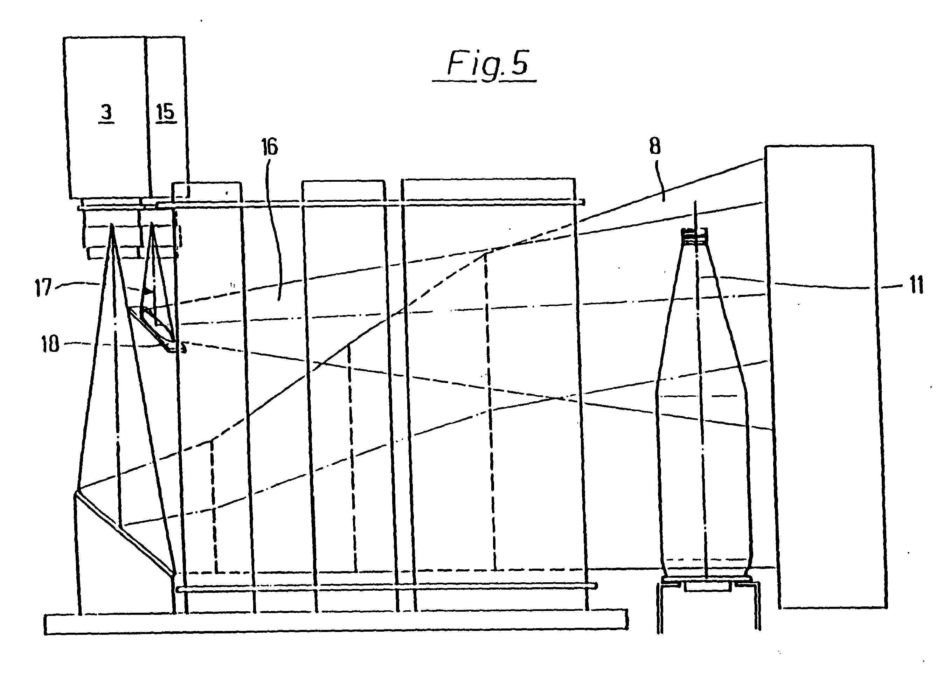

Die Fig. 5 entspricht weitgehend der Fig. 4, wobei zusätzlich die Kamera 15 zur Kontur- und Höhenerkennung mit ihrem Strahlengang 16 angedeutet ist. Wegen der senkrechten Anordnung der Kamera 15 ist ebenfalls ein den Strahlengang 16 aus der senkrechten Richtung quer zur Symmetrielinie 11 der zu prüfenden Flasche 5 umlenkender Spiegel 18 erforderlich. Die zweite Kamera 15 ist in nicht dargestellter Weise, ähnlich wie die Kamera 3, an der oberen Positionierplatte 21 einstellbar befestigt.

Zur Kontur- und Höhenkontrolle reicht die Erfassung des Schulter- und Kopfbereiches der Flaschen 5. Dadurch genügt im Vergleich zu den Strahlengängen der Seitenwandkontrolle eine kürzere Länge des Strahlengangs 17, so daß die Kamera 15 ohne zusätzliche Umlenkspiegel ähnlich nahe an der Flasche 5 angeordnet werden kann, wie die zur Seitenwandkontrolle dienende Kamera 3.

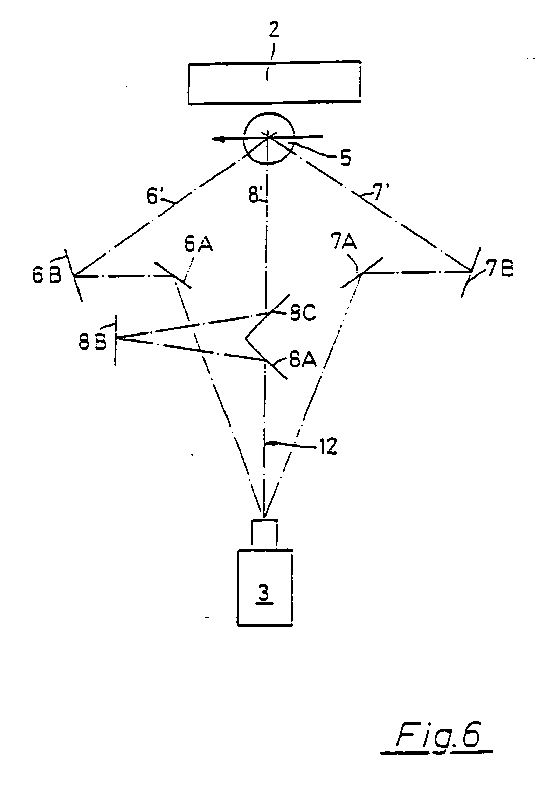

Die Fig. 6 zeigt eine alternative Spiegelanordnung zur Erzeugung der zur Seitenwandkontrolle erforderlichen Strahlengänge. Die dargestellte Spiegelanordnung erzeugt ebenfalls zwei zur optischen Achse 12 der Kamera 3 symmetrisch ausgebildete Strahlengänge 6 und 7, von denen nur die Mittelachsen 6'und 7' dargestellt sind. Zu diesem Zweck sind jeweils Spiegel 6A, 6B und 7A, 7B vorhanden, die mit einem ausreichenden Zwischenabstand zur optischen Achse 12 angeordnet sind, derart, daß die den dritten Strahlengang 8 bildenden Spiegel 8A, B, C vor den vorgenannten Spiegeln der beiden übrigen Strahlengänge plaziert werden können, und der zur Flasche 5 führende Abschnitt des Strahlengangs 8 zwischen den zu den Strahlengängen 6 bis 7 gehörenden Spiegeln ungehindert hindurchtreten kann.

Abweichend von den dargestellten Ausführungen sind auch Spiegelanordnungen denkbar und vorteilhaft, die zur Seitenwandkontrolle mehr als drei Strahlengänge erzeugen.

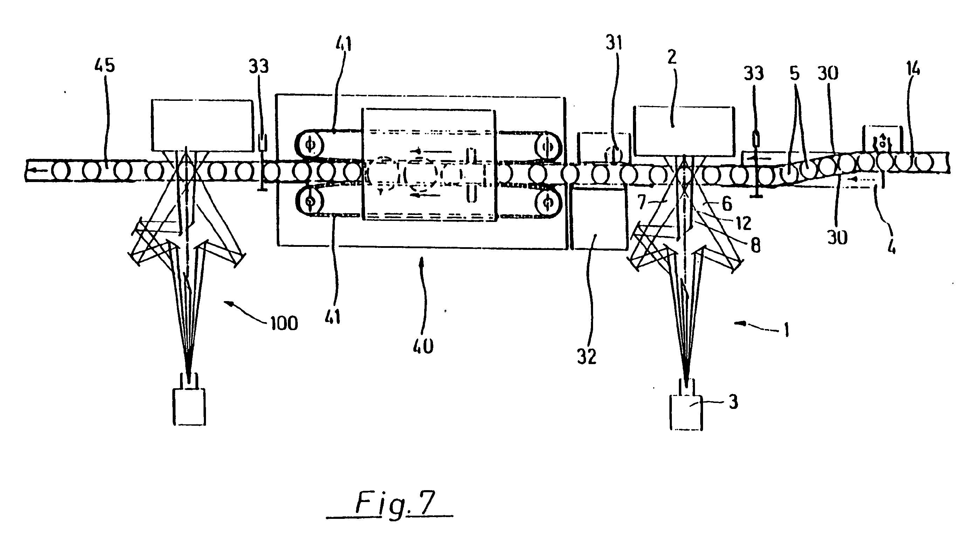

Die in Fig. 7 dargestellte Inspektionsmaschine besitzt grundsätzlich den gleichen mechanischen Aufbau wie die Inspektionsmaschine nach Fig. 1. Zusätzlich verfügt sie aber über eine Inspektionsstation 100 für eine zweite Seitenwandkontrolle der Flaschen 5. Diese Inspektionsstation 100 ist unmittelbar hinter den Riemen 41 der Inspektionsstation 40 am Förderband 45 angeordnet. Die Spiegelanordnung der Inspektionsstation 100 stimmt mit der der Inspektionsstation 1 überein. Beide Riemen 41 werden synchron zu den Förderbändern 4 und 45 angetrieben, allerdings mit einer geringen Geschwindigkeitsdifferenz zueinander. In Abhängigkeit der eingestellten Geschwindigkeitsdifferenz werden die Flaschen während der Überführung vom Förderband 4 auf das Förderband 45 um einen bestimmten Winkel, vorzugsweise ca. 90 Grad, um ihre Hochachse gedreht und anschließend ohne Eigendrehung durch die Inspektionsstation 100 geführt. Nachfolgend kann die Ausscheidung unbrauchbarer Flaschen 5 vorgenommen werden, wie vorhergehend zur Fig. 1 bereits erläutert wurde.

Die Geschwindigkeitsdifferenz zwischen den beiden Riemen 41 ist so einstellbar, daß bei einer Umstellung der Inspektionsmaschine auf Flaschen mit einem anderen Umfangsmaß der Drehwinkel der Flaschen beim Durchfahren der Riemenstrecke konstant 90 Grad beträgt. Zu diesem Zweck ist beispielsweise einer der beiden Riemen 41 antriebsmäßig mit den Förderbändern 4 und/oder 45 verbunden, während der zweite Riemen 41 über einen eigenen, regelbaren Antrieb mit einer programmierbaren Steuerung verfügt. Die Umstellung des Übersetzungsverhältnisses zwischen den beiden Riemen 41 kann dann auf Knopfdruck erfolgen.

Eine Seitenwandkontrolle mit zwei Inspektionsstationen 1 und 100 hat den Vorteil, daß die erforderlichen Zwischenabstände im Flaschenstrom klein gehalten werden können, wodurch auch die Flaschentransportgeschwindigkeit bei einer vorgegebenen Leistung niedriger ist, als bei einer Kontrolle der gesamten Flaschenseitenwand mit nur einer Inspektionsstation. Dies ist auf den kleineren Winkel zwischen den Strahlen 6 und 7 zurückzuführen, der gewählt werden kann, z.B. 60 Grad, da die Flaschenseitenwand beim Passieren einer der beiden Inspektionsstationen 1 und 100 nicht vollumfänglich aufgenommen werden muß. Zusätzlich ergeben sich durch den kleineren Winkel optische Vorteile bei der Bildaufnahme. Bei einer Seitenwandkontrolle mit nur einer einzigen Inspektionsstation ist dagegen zwischen den Strahlen 6 und 7 ein Winkel von über 100 Grad zur vollständigen Erfassung einer Flaschenseitenwand erforderlich.

## Patentansprüche

1. Inspektionsmaschine für durchleuchtbare Flaschen (5) oder dergleichen mit einer Inspektionsstation (1) zur Seitenwandkontrolle, die eine Beleuchtungseinrichtung (2), eine Bildaufnahmeeinrichtung (3) und eine zwischen einer zu prüfenden Flasche und der Bildaufnahmeeinrichtung angeordnete Strahlengänge erzeugende Spiegelanordnung aufweist, sowie mit einer die Flaschen (5) einspurig durch die Strahlengänge führenden Transporteinrichtung (4),
**gekennzeichnet durch**
eine Spiegelanordnung (6a, 6b, 7a, 7b, 8a, 8b, 8c), die wenigstens drei, die Seitenwand einer zu prüfenden Flasche (5) aus umfänglich verschiedenen Richtungen auf eine gemeinsame Bildaufnahmeeinrichtung abbildende Strahlengänge (6, 7, 8) erzeugt,
wobei
die optische Achse (12) der Bildaufnahmeeinrichtung (3) abschnittsweise im wesentlichen parallel zur Symmetrielinie (11) der Flaschen (5) ausgerichtet ist und die optische Achse (12) - ausgehend von der Bildaufnahmeeinrichtung (3) - **durch** einen Spiegel (13) quer zur Symmetrielinie (11) der Flaschen (5) umgelenkt wird und
die_ Bildaufnahmeeinrichtung (3) seitlich neben der Transporteinrichtung (4) mit Abstand oberhalb deren Förderebene angeordnet ist.

2. Inspektionsmaschine nach Anspruch 1, **dadurch gekennzeichnet, dass** sich alle Strahlengänge (6, 7, 8) in einem gemeinsamen Kreuzungsbereich (9) schneiden, durch den die Flaschen (5) mittels der Transporteinrichtung (4) hindurchführbar sind.

3. Inspektionsmaschine nach wenigstens einem der vorhergehenden Ansprüche, **dadurch gekennzeichnet, dass** sich die Mittelachsen (6', 7', 8') aller Strahlengänge (6, 7, 8) an einer gemeinsamen Schnittstelle (10) treffen und die Flaschen (5) mittels der Transporteinrichtung (4) durch die Schnittstelle (10) führbar sind, insbesondere derart, dass die Symmetrielinie (11) der Flaschen in etwa die Schnittstelle (10) passiert und im Augenblick des Zusammentreffens der Symmetrielinie mit dieser Schnittstelle die Bildaufnahme erfolgt.

4. Inspektionsmaschine nach wenigstens einem der vorhergehenden Ansprüche, **dadurch gekennzeichnet, dass** alle Strahlengänge (6, 7, 8) gleich lang sind, insbesondere die Mittelachsen (6', 7', 8') der Strahlengänge von der Bildaufnahmeeinrichtung (3) bis zu einer gemeinsamen Schnittstelle (10) eine übereinstimmende Länge, vorzugsweise im Bereich von 750 bis 1500 mm, insbesondere 1240 mm, aufweisen.

5. Inspektionsmaschine nach wenigstens einem der vorhergehenden Ansprüche, **dadurch gekennzeichnet, dass** die optische Achse (12) der Bildaufnahmeeinrichtung (3) sowohl normal zur Transportrichtung der Flaschen in der Inspektionsstation (1) als auch zumindest abschnittsweise quer zur Symmetrielinie (11) der Flaschen (5) ausgerichtet ist.

6. Inspektionsmaschine nach einem der vorhergehenden Ansprüche, **dadurch gekennzeichnet, dass** zwei Strahlengänge (6, 7) symmetrisch zur optischen Achse (12) der Bildaufnahmeeinrichtung (3) ausgebildet sind, die Strahlengänge vorzugsweise jeweils durch zwei zwischen der Bildaufnahmeeinrichtung (3) und der Beleuchtungseinrichtung (2) angeordnete Spiegel (6a, 6b und 7a, 7b) umgelenkt werden, derart, dass die Strahlengänge (6, 7), ausgehend von der Bildaufnahmeeinrichtung, zunächst durch ein erstes Paar von Spiegeln (6a, 7a) von der optischen Achse (12) wegweisend und durch ein nachgeordnetes zweites Paar von Spiegeln (6b, 7b) zur optischen Achse (12) hinweisend auf den Seitenwandbereich einer zu prüfenden Flasche (5) gerichtet werden, wobei die Schnittstelle (10) der Mittelachsen (6', 7') der Strahlengänge insbesondere auf der optischen Achse (12) der Bildaufnahmeeinrichtung (3) liegt.

7. Inspektionsmaschine nach wenigstens einem der vorhergehenden Ansprüche, **dadurch gekennzeichnet, dass** zwischen zwei symmetrisch verlaufenden Strahlengängen (6, 7) ein dritter; vorzugsweise mittig ausgerichteter Strahlengang (8) angeordnet ist, wobei dessen Mittelachse (8') zumindest abschnittsweise, mit der optischen Achse (12) der Bildaufnahmeeinrichtung (3) fluchtet.

8. Inspektionsmaschine nach wenigstens einem der vorhergehenden Ansprüche, **dadurch gekennzeichnet, dass** ein dritter Strahlengang (8) durch zwei auf der optischen Achse (12) der Bildaufnahmeeinrichtung (3) liegende Spiegel (8a, 8c) und einen zwischengeschalteten, neben der optischen Achse (12) angeordneten Spiegel (8b) umgelenkt wird, wobei der neben der optischen Achse positionierte Spiegel (8b) den Strahlengang (8) vom ersten auf den zweiten der beiden auf der optischen Achse liegenden Spiegel (8a, 8c) umlenkt.

9. Inspektionsmaschine nach wenigstens einem der vorhergehenden Ansprüche 6 bis 8, **dadurch gekennzeichnet, dass** die dem dritten Strahlengang (8) zugeordneten Spiegel (8A, 8B, 8C) - von der Bildaufnahmeeinrichtung(3)zur Beleuchtungseinrichtung (2) gesehen - vor den Spiegeln (6A, 6B, 7A, 7B) der symmetrisch verlaufenden Strahlengänge (6, 7) angeordnet sind.

10. Inspektionsmaschine nach wenigstens einem der vorhergehenden Ansprüche, **dadurch gekennzeichnet, dass** zumindest der auf die Seitenwand einer Flasche auftreffende Abschnitt eines dritten Strahlenganges (8) durch einen Zwischenraum zwischen den den übrigen Strahlengängen (6, 7) zugeordneten Spiegeln (6A, 6B, 7A, 7B) hindurchtreten kann.

11. Inspektionsmaschine nach wenigstens einem der vorhergehenden Ansprüche, **dadurch gekennzeichnet, dass** ein einem dritten Strahlengang (8) zugeordneter Spiegel (8a) vor einem ersten Paar von Spiegeln (6a, 7a) zweier symmetrisch verlaufender Strahlengänge (6, 7) angeordnet ist und ein weiterer Spiegel (8c) dahinter.

12. Inspektionsmaschine nach wenigstens einem der vorhergehenden Ansprüche, **dadurch gekennzeichnet, dass** zwei Strahlengänge (6, 7) in einem Winkelbereich von 45 bis 80 Grad, insbesondere 60 Grad, bezogen auf ihre Mittelachsen (6', 7'), zueinander ausgerichtet auf eine zu prüfende Flasche (5) treffen.

13. Inspektionsmaschine nach Anspruch 12, **dadurch gekennzeichnet, dass** ein dritter Strahlengang (8) - den von den übrigen Strahlengängen (6, 7) eingeschlossenen Winkel halbierend - auf eine zu prüfende Flasche (5) trifft.

14. Inspektionsmaschine nach wenigstens einem der vorhergehenden Ansprüche, **dadurch gekennzeichnet, dass** die Inspektionsstation (1) eine zweite Bildaufnahmeeinrichtung (15) zur Kontur- und/oder Höhen und/oder Farberkennung der Flaschen (5) aufweist, wobei deren Strahlengang (16) durch den Kreuzungsbereich (9) der Strahlengänge (6, 7, 8) der Seitenwandkontrolle verläuft, insbesondere die optische Achse (17) im wesentlichen durch die Schnittstelle (10) der Mittelachsen (6', 7', 8') der Strahlengänge der Seitenwandkontrolle verläuft, so dass die Bildaufnahme einer Flasche durch beide Bildaufnahmeeinrichtungen (3, 15) in etwa zeitgleich erfolgen kann.

15. Inspektionsmaschine nach Anspruch 14, **dadurch gekennzeichnet, dass** die optische Achse (17) der zweiten Bildaufnahmeeinrichtung (15) abschnittsweise im wesentlichen parallel zur Symmetrielinie (11) der Flaschen (5) verläuft und durch einen Spiegel (18) quer zur Symmetrielinie (11) der Flaschen (5) umgelenkt wird.

16. Inspektionsmaschine nach wenigstens einem der Ansprüche 14 oder 15, **dadurch gekennzeichnet, dass** die quer zur Symmetrielinie (11) der Flaschen (5) zusammenlaufenden Abschnitte der optischen Achsen (12, 17) der Bildaufnahmeeinrichtungen (3, 15) einen spitzen Winkel im Bereich von vorzugsweise 15 bis 35 Grad, insbesondere 25 Grad, einschließen.

17. Inspektionsmaschine nach wenigstens einem der vorhergehenden Ansprüche, **dadurch gekennzeichnet, dass** die Spiegel (6a, 6b, 7a, 7b, 8a, 8b, 8c, 13) auf einer gemeinsamen Grundplatte (19) stehend angeordnet sind.

18. Inspektionsmaschine nach Anspruch 17, **dadurch gekennzeichnet, dass** die Spiegel (6a, 6b, 7a, 7b, 8a, 8b, 8c) durch parallel angeordnete, mit Schlitzen ausgestattete Positionierplatten (21) gehalten werden.

19. Inspektionsmaschine nach wenigstens einem der vorhergehenden Ansprüche, **dadurch gekennzeichnet, dass** die Bildaufnahmeeinrichtungen (3, 15) eine Flächenmatrix besitzen, wobei insbesondere die Strahlengänge (6, 7, 8) der Seitenwandkontrolle nebeneinander auf der Flächenmatrix der Bildaufnahmeeinrichtung (3) abgebildet werden.

20. Inspektionsmaschine nach wenigstens einem der vorhergehenden Ansprüche, **dadurch gekennzeichnet, dass** die Bildaufnahme durch elektronische Kameras, insbesondere CCD-Kameras, erfolgt.

21. Inspektionsmaschine nach wenigstens einem der vorhergehenden Ansprüche, **dadurch gekennzeichnet, dass** die Flaschen (5) zur Seitenwandkontrolle nacheinander zwei Inspektionsstationen (1, 100) in unterschiedlichen Drehstellungen durchlaufen.

22. Inspektionsmaschine nach Anspruch 21, **dadurch gekennzeichnet, dass** zwischen den Inspektionsstationen (1, 100) eine Vorrichtung zum Drehen der Flaschen (5) angeordnet ist, vorzugsweise bestehend aus zwei gegenüberliegend an der Mantelfläche der Flaschen angreifenden Riemen (41), die mit unterschiedlicher Geschwindigkeit synchron zur Transporteinrichtung (4) antreibbar sind.

23. Inspektionsmaschine nach Anspruch 22, **dadurch gekennzeichnet, dass** zwischen den an den Flaschen angreifenden Riemen (41) eine Geschwindigkeitsdifferenz zur Drehung der Flaschen einstellbar ist, derart, dass bei einer Umstellung auf Flaschen mit einem anderen Umfangsmaß der Drehwinkel der Flaschen beim Durchlaufen der Riemen (41) konstant bleibt.

## Claims

1. Machine for inspecting illuminatable bottles (5) or similar, with an inspection station (1) for inspecting the side wall, which comprises an illuminating device (2), an image capturing device (3) and a mirror arrangement disposed between a bottle to be inspected and the image capturing device creating optical paths, and a conveyor unit (4) feeding the bottles (5) on a single track through the optical paths,
**characterised by**
a mirror arrangement (6a, 6b, 7a, 7b, 8a, 8b, 8c) which creates at least three optical paths (6, 7, 8) reproducing the side wall of a bottle (5) to be inspected on a common image capturing device from different circumferential directions,
and
the optical axis (12) of the image capturing device (3) is oriented essentially parallel with the line of symmetry (11) of the bottles (5) in certain regions and the optical axis (12) is deflected - starting from the image capturing device (3) - by a mirror (13) transversely to the line of symmetry (11) of the bottles (5) and
the image capturing device (3) is disposed at the side adjacent to the conveyor unit (4) at a distance above the conveyor plane thereof.

2. Inspecting machine as claimed in claim 1, **characterised in that** all the optical paths (6, 7, 8) intersect in a common intersection area (9) through which the bottles (5) can be fed by means of the conveyor unit (4).

3. Inspecting machine as claimed in at least one of the preceding claims, **characterised in that** the mid-axes (6', 7', 8') of all the optical paths (6, 7, 8) meet at a common intersection point (10) and the bottles (5) can be fed through the intersection point (10) by the conveyor unit (4), in particular so that the line of symmetry (11) of the bottles passes more or less through the intersection point (10) and the image is captured at the instant the line of symmetry coincides with this intersection point.

4. Inspecting machine as claimed in at least one of the preceding claims, **characterised in that** all the optical paths (6, 7, 8) are of equal length, in particular the mid-axes (6', 7', 8') of the optical paths have a matching length from the image capturing device (3) to a common intersection point (10), preferably in the range of 750 to 1500 mm, in particular 1240 mm.

5. Inspecting machine as claimed in at least one of the preceding claims, **characterised in that** the optical axis (12) of the image capturing device (3) is oriented both normally to the direction in which the bottles are conveyed through the inspection station (1) and transversely to the line of symmetry (11) of the bottles (5) in at least certain regions.

6. Inspecting machine as claimed in one of the preceding claims, **characterised in that** two optical paths (6, 7) are disposed symmetrically with respect to the optical axis (12) of the image capturing device (3), the optical paths are preferably deflected respectively by two mirrors (6a, 6b and 7a, 7b) disposed between the image capturing device (3) and the illuminating device (2) so that the optical paths (6, 7) are directed, starting from the image capturing device,by a first pair of mirrors (6a, 7a) pointing away from the optical axis (12) first of all and by a second pair of mirrors (6b, 7b) disposed downstream towards the optical axis (12) pointing towards the side wall region of a bottle (5) to be inspected, and the intersection point (10) of the mid-axes (6', 7') of the optical paths lies on the optical axis (12) of the image capturing device (3) in particular.

7. Inspecting machine as claimed in at least one of the preceding claims, **characterised in that** a third, preferably centrally oriented, optical path (8) is disposed between two symmetrically extending optical paths (6, 7), and its mid-axis (8') is aligned with the optical axis (12) of the image capturing device (3) in at least certain regions.

8. Inspecting machine as claimed in at least one of the preceding claims, **characterised in that** a third optical path (8) is deflected by two mirrors (8a, 8c) lying on the optical axis (12) of the image capturing device (3) and a mirror (8b) disposed in between adjacent to the optical axis (12), and the mirror (8b) positioned adjacent to the optical axis deflects the optical path (8) from the first to the second of the two mirrors (8a, 8c) lying on the optical axis.

9. Inspecting machine as claimed in at least one of the preceding claims 6 to 8, **characterised in that** the mirrors (8A, 8B, 8C) assigned to the third optical path (8) - viewed from the image capturing device (3) towards the illuminating device (2) - are disposed upstream of the mirrors (6A, 6B, 7A, 7B) with the symmetrically extending optical paths (6, 7).

10. Inspecting machine as claimed in at least one of the preceding claims, **characterised in that** at least the portion of a third optical path (8) hitting the side wall of a bottle is able to pass through a gap between the mirrors (6A, 6B, 7A, 7B) assigned to the other optical paths (6, 7).

11. Inspecting machine as claimed in at least one of the preceding claims, **characterised in that** a mirror (8a) assigned to a third optical path (8) is disposed in front of a first pair of mirrors (6a, 7a) with two symmetrically extending optical paths (6, 7) and another mirror (8c) is disposed behind.

12. Inspecting machine as claimed in at least one of the preceding claims, **characterised in that** two optical paths (6, 7) oriented one towards the other hit a bottle (5) to be inspected within an angular range of 45 to 80 degrees, in particular 60 degrees, by reference to their mid-axes (6', 7').

13. Inspecting machine as claimed in claim 12, **characterised in that** a third optical path (8) - bisecting the angle subtended by the other optical paths (6, 7) - hits a bottle (5) to be inspected.

14. Inspecting machine as claimed in at least one of the preceding claims, **characterised in that** the inspection station (1) has a second image capturing device (15) for detecting the contour and/or height and/or colour of the bottles (5), and its optical path (16) extends through the intersection area (9) of the optical paths (6, 7, 8) of the side wall inspection, in particular the optical axis (17) extends essentially through the intersection point (10) of the mid-axes (6', 7', 8') of the optical paths of the side wall inspection so that the image of a bottle can be captured by both image capturing devices (3, 15) more or less simultaneously.

15. Inspecting machine as claimed in claim 14 , **characterised in that** the optical axis (17) of the second image capturing device (15) extends essentially parallel with the line of symmetry (11) of the bottles (5) in certain regions and is deflected by a mirror (18) transversely to the line of symmetry (11) of the bottles (5).

16. Inspecting machine as claimed in at least one of claims 14 or 15, **characterised in that** the portions of the optical axes (12, 17) of the image capturing devices (3, 15) converging transversely to the line of symmetry (11) of the bottles (5) subtend an acute angle in the range of preferably 15 to 35 degrees, in particular 25 degrees.

17. Inspecting machine as claimed in at least one of the preceding claims, **characterised in that** the mirrors (6a, 6b, 7a, 7b, 8a, 8b, 8c, 13) are disposed standing on a common base plate (19).

18. Inspecting machine as claimed in claim 17, **characterised in that** the mirrors (6a, 6b, 7a, 7b, 8a, 8b, 8c) are retained by positioning plates (21) provided with slots, disposed in parallel.

19. Inspecting machine as claimed in at least one of the preceding claims, **characterised in that** the image capturing devices (3, 15) have a surface matrix, and in particular the optical paths (6, 7, 8) of the side wall inspection are reproduced adjacent to one anotheron the surface matrix of the image capturing device (3).

20. Inspecting machine as claimed in at least one of the preceding claims, **characterised in that** the image is captured by electronic cameras, in particular CCD cameras.

21. Inspecting machine as claimed in at least one of the preceding claims, **characterised in that** the bottles (5) pass through two consecutive inspection stations (1, 100) in different positions of rotation for the side wall inspection.

22. Inspecting machine as claimed in claim 21, **characterised in that** a device for rotating the bottles (5) is disposed between the inspection stations (1, 100), preferably comprising two oppositely lying belts (41) acting on the external surface of the bottles, which can be driven at different speeds synchronously with the conveyor unit (4).

23. Inspecting machine as claimed in claim 22, **characterised in that** a differential speed between the belts (41) acting on the bottles for rotating the bottles can be adjusted so that the angle of rotation of the bottles remains constant as they pass through the belts (41) in the event of a switch to bottles with a different circumferential dimension.

## Revendications

1. Machine de contrôle pour des bouteilles (5) ou autres objets aptes à être examinés par transparence, avec une station de contrôle (1) pour le contrôle de la paroi latérale, qui comporte un dispositif d'éclairage (2), un dispositif d'enregistrement d'image (3) et un dispositif à miroir qui est disposé entre une bouteille à examiner et le dispositif d'enregistrement d'image et qui produit des trajectoires de rayons, et avec un transporteur (4) qui fait passer les bouteilles (5), sur une seule voie, à travers les trajectoires de rayons,
**caractérisée par** un dispositif à miroirs (6a, 6b, 7a, 7b, 8a, 8b, 8c) qui produit au moins trois trajectoires de rayons (6, 7, 8) représentant sur un dispositif d'enregistrement d'image commun, à partir de directions circonférentielles différentes, la paroi latérale d'une bouteille à examiner (5),
étant précisé que l'axe optique (12) du dispositif d'enregistrement d'image (3) est orienté globalement parallèlement, par endroits, à l'axe de symétrie (11) des bouteilles (5) et que l'axe optique (12), à partir du dispositif d'enregistrement d'image (3), est dévié par un miroir (13) transversalement par rapport à l'axe de symétrie (11) des bouteilles (5), et
que le dispositif d'enregistrement d'image (3) est disposé sur le côté du transporteur (4), à une certaine distance au-dessus du plan de transport de celui-ci.

2. Machine de contrôle selon la revendication 1, **caractérisée en ce que** toutes les trajectoires de rayons (6, 7, 8) se coupent dans une zone de croisement commune (9) que les bouteilles (5) peuvent traverser à l'aide du transporteur (4).

3. Machine de contrôle selon l'une au moins des revendications précédentes, **caractérisée en ce que** les axes médians (6', 7', 8') de toutes les trajectoires de rayons (6, 7, 8) se rejoignent au niveau d'une intersection commune (10), et les bouteilles (5) sont aptes à traverser l'intersection (10) à l'aide du transporteur (4), en particulier de telle sorte que l'axe de symétrie (11) des bouteilles passe à peu près par ladite intersection (10) et que l'enregistrement d'image ait lieu au moment où l'axe de symétrie rencontre cette intersection.

4. Machine de contrôle selon l'une au moins des revendications précédentes, **caractérisée en ce que** toutes les trajectoires de rayons (6, 7, 8) ont la même longueur, en particulier les axes médians (6', 7', 8') des trajectoires de rayons présentent, du dispositif d'enregistrement d'image (3) jusqu'à une intersection commune (10), une longueur coïncidente, de préférence dans la plage de 750 à 1500 mm, en particulier de 1240 mm.

5. Machine de contrôle selon l'une au moins des revendications précédentes, **caractérisée en ce que** l'axe optique (12) du dispositif d'enregistrement d'image (3) est à la fois normal par rapport au sens de transport des bouteilles dans la station de contrôle (1) et au moins par endroits transversal par rapport à l'axe de symétrie (11) des bouteilles (5).

6. Machine de contrôle selon l'une au moins des revendications précédentes, **caractérisée en ce que** deux trajectoires de rayons (6, 7) sont symétriques par rapport à l'axe optique (12) du dispositif d'enregistrement d'image (3), les trajectoires de rayons sont de préférence déviées chacune par deux miroirs (6a, 6b et 7a, 7b) disposés entre le dispositif d'enregistrement d'image (3) et le dispositif d'éclairage (2), de telle sorte que lesdites trajectoires de rayons (6, 7), à partir du dispositif d'enregistrement d'image, soient dirigées vers la zone de paroi latérale d'une bouteille à examiner (5), tout d'abord à l'opposé de l'axe optique (12) grâce à une première paire de miroirs (6a, 7a) puis en direction de l'axe optique (12) grâce à une seconde paire de miroirs (6b, 7b) installée en aval, l'intersection (10) des axes médians (6', 7') des trajectoires de rayons étant située en particulier sur l'axe optique (12) du dispositif d'enregistrement d'image (3).

7. Machine de contrôle selon l'une au moins des revendications précédentes, **caractérisée en ce qu'**il est prévu entre deux trajectoires de rayons (6, 7) symétriques une troisième trajectoire de rayon (8), de préférence centrée, l'axe médian (8') de celle-ci étant au moins par endroits dans l'alignement de l'axe optique (12) du dispositif d'enregistrement d'image (3).

8. Machine de contrôle selon l'une au moins des revendications précédentes, **caractérisée en ce qu'**une troisième trajectoire de rayon (8) est déviée par deux miroirs (8a, 8c) situés sur l'axe optique (12) du dispositif d'enregistrement d'image (3) et par un miroir (8b) intercalé, près de l'axe optique (12), le miroir (8b) placé près de l'axe optique déviant la trajectoire de rayon (8) entre les premier et deuxième miroirs (8a, 8c) situés sur l'axe optique.

9. Machine de contrôle selon l'une au moins des revendications précédentes 6 à 8, **caractérisée en ce que** les miroirs (8A, 8B, 8C) associés à la troisième trajectoire de rayon (8) sont disposés, vus du dispositif d'enregistrement d'image (3) vers le dispositif d'éclairage (2), devant les miroirs (6A, 6B, 7A, 7B) des trajectoires de rayons (6, 7) symétriques.

10. Machine de contrôle selon l'une au moins des revendications précédentes, **caractérisée en ce que** la partie, au moins, d'une troisième trajectoire de rayon (8) qui arrive sur la paroi latérale d'une bouteille peut traverser un intervalle entre les miroirs (6A, 6B, 7A, 7B) associés aux autres trajectoires de rayons (6, 7).

11. Machine de contrôle selon l'une au moins des revendications précédentes, **caractérisée en ce qu'**un miroir (8a) associé à une troisième trajectoire de rayon (8) est disposé devant une première paire de miroirs (6a, 7a) de deux trajectoires de rayons (6, 7) symétriques, et un autre miroir (8c) est disposé derrière.

12. Machine de contrôle selon l'une au moins des revendications précédentes, **caractérisée en ce que** deux trajectoires de rayons (6, 7) arrivent sur une bouteille à examiner (5) avec leurs axes médians (6', 7') orientés l'un par rapport à l'autre dans une zone angulaire de 45 à 80 degrés, en particulier de 60 degrés.

13. Machine de contrôle selon la revendication 12, **caractérisée en ce qu'**une troisième trajectoire de rayon (8) arrive sur une bouteille à examiner (5) en divisant en deux l'angle défini par les autres trajectoires de rayons (6, 7).

14. Machine de contrôle selon l'une au moins des revendications précédentes, **caractérisée en ce que** la station de contrôle (1) comporte un second dispositif d'enregistrement d'image (15) pour détecter le contour et/ou la hauteur et/ou la couleur des bouteilles (5), la trajectoire de rayon (16) de ce second dispositif (15) traversant la zone de croisement (9) des trajectoires de rayons (6, 7, 8) du contrôle de paroi latérale, l'axe optique (17) traversant globalement l'intersection (10) des axes médians (6', 7', 8) des trajectoires de rayon du contrôle de paroi latérale, de sorte que l'enregistrement d'image d'une bouteille peut se faire à peu près en même temps par les deux dispositifs d'enregistrement d'image (3, 15).

15. Machine de contrôle selon la revendication 14, **caractérisée en ce que** l'axe optique (17) du second dispositif d'enregistrement d'image (15) est globalement parallèle, par endroits, à l'axe de symétrie (11) des bouteilles (5) et est dévié par un miroir (18) transversalement par rapport à l'axe de symétrie (11) des bouteilles (5).

16. Machine de contrôle selon l'une au moins des revendications précédentes 14 ou 15, **caractérisée en ce que** les parties des axes optiques (12, 17) du dispositif d'enregistrement d'image (3, 15) qui convergent transversalement par rapport à l'axe de symétrie (11) des bouteilles (5) forment un angle aigu dans la plage de préférence de 15 à 35 degrés, en particulier de 25 degrés.

17. Machine de contrôle selon l'une au moins des revendications précédentes, **caractérisée en ce que** les miroirs (6a, 6b, 7a, 7b, 8a, 8b, 8c, 13) sont disposés à la verticale sur une plaque de base commune (19).

18. Machine de contrôle selon la revendication 17, **caractérisée en ce que** les miroirs (6a, 6b, 7a, 7b, 8a, 8b, 8c) sont retenus par des plaques de positionnement (21) disposées parallèlement et pourvues de fentes.

19. Machine de contrôle selon l'une au moins des revendications précédentes, **caractérisée en ce que** les dispositifs d'enregistrement d'image (3, 15) ont une matrice de surface, les trajectoires de rayons (6, 7, 8) du contrôle de paroi latérale, en particulier, étant représentées côte à côte sur ladite matrice de surface du dispositif d'enregistrement d'image (3).

20. Machine de contrôle selon l'une au moins des revendications précédentes, **caractérisée en ce que** l'enregistrement d'image se fait grâce à des caméras électroniques, en particulier des caméras CCD.

21. Machine de contrôle selon l'une au moins des revendications précédentes, **caractérisée en ce que** les bouteilles (5), pour le contrôle de paroi latérale, traversent successivement deux stations de contrôle (1, 100) dans des positions de rotation différentes.

22. Machine de contrôle selon la revendication 21, **caractérisée en ce qu'**il est prévu entre les stations de contrôle (1, 100) un dispositif pour tourner les bouteilles (5), qui se compose de préférence de deux courroies (41) agissant l'une en face de l'autre sur la surface latérale des bouteilles et aptes à être entraînées à des vitesses différentes de manière synchrone par rapport au transporteur (4).

23. Machine de contrôle selon la revendication 22, **caractérisée en ce qu'**entre les courroies (41) qui agissent sur les bouteilles peut être réglée une différence de vitesse pour tourner les bouteilles, de telle sorte que quand on passe à des bouteilles avec une circonférence différente, l'angle de rotation des bouteilles lors du franchissement des courroies (41) reste constant.
